# EUROPÄISCHE PATENTSCHRIFT

(11) **EP 0 719 962 B1**
(45) Veröffentlichungstag und Bekanntmachung des Hinweises auf die Patenterteilung: **08.09.1999**
(21) Anmeldenummer: 95120222.5
(22) Anmeldetag: 20.12.1995
(51) Int. Cl.: F16H 7/08

(54) **Zahnriemenspanneinrichtung**
Tensioning device for a toothed belt
Tendeur de courroie crantée

(30) Priorität: 30.12.1994 DE 4447017
(43) Veröffentlichungstag der Anmeldung: 03.07.1996
(73) Patentinhaber: Koenig & Bauer Aktiengesellschaft, 97080 Würzburg (DE)
(72) Erfinder: Hillebrand, Bernd Anton, D-97493 Bergrheinfeld (DE)

(56) Entgegenhaltungen:
- GB-A- 348 939
- GB-A- 2 206 175
- GB-A- 2 228 984
- US-A- 3 888 217
- US-A- 5 316 523
- US-A- 5 362 279

## Beschreibung

Die Erfindung betrifft eine Zahnriemenspanneinrichtung für Antriebe, deren Achsabstände veränderlich anordenbar sind, z. B. für einen Antrieb eines Falzapparates im zweiten Längsfalz.

Es ist bekannt, zur schlupflosen Kraftübertragung bei Antrieben Zahnriemen zu verwenden. Bei der Veränderung von Achsabständen eines Antriebes jedoch führt dies zu einer Änderung der Umschlingungslänge und damit zur Notwendigkeit, Spannrollen nachzustellen. Zusätzlich kommt es zu einem Verdrehen der Zahnscheiben zueinander, was eine unerwünschte Veränderung der Stellung des Antriebes zum Abtrieb zur Folge hat.

Der Erfindung liegt die Aufgabe zugrunde, eine Zahnriemenspanneinrichtung für Antriebe zu schaffen, deren Achsabstände bei gleicher Zahnriemenspannung sowohl im Stillstand als auch während des Betriebes veränderbar sind, ohne dabei den Antrieb und Abtrieb zueinander zu verdrehen.

Diese Aufgabe wird erfindungsgemäß durch die Merkmale des kennzeichnenden Teiles des Anspruches 1 gelöst.

Die mit der Erfindung erzielbaren Vorteile bestehen darin, daß infolge der Anordnung eines sich mit Führungsbolzen an gestellfesten Kurven abstützenden, auf einem Hebel für eine Längsführung verdrehbar gelagerten Spannhebels bei einem veränderbaren Wellenabstand der die Zahnscheiben tragenden Wellenzapfen eine beidseitig symmetrische Spannung des Zahnriemens erreicht wird. Dies kann entweder im Stillstand oder während des Betriebes der Maschine erfolgen. Die Beibehaltung einer konstanten Spannung des Zahnriemens gilt sowohl für ein Vergrößern als auch für ein Verkleinern des Wellenabstandes des Antriebes. Mittels der erfindungsgemäßen Zahnriemenspanneinrichtung ist es somit möglich geworden, die Wellenabstände von Antrieben zu verändern, ohne daß in Riemenspannungselemente manuell eingegriffen werden muß. Die Riemenspannung bleibt konstant, ohne daß Antrieb und Abtrieb dabei ungewollt zueinander verdreht bzw. zueinander verstellt werden.

Ein Ausführungsbeispiel der Erfindung ist in der Zeichnung dargestellt und wird im folgenden näher beschrieben.

Es zeigen
- Fig. 1: eine schematische Darstellung der erfindungsgemäßen Zahnriemenspanneinrichtung in einer Vorderansicht;
- Fig. 2: einen Schnitt II - II nach Fig. 1;
- Fig. 3: einen Schnitt III - III durch einen zweiarmigen Spannhebel nach Fig. 1, um ca. 90° gedreht, jedoch ohne die Darstellung der gestellfesten Kurven.

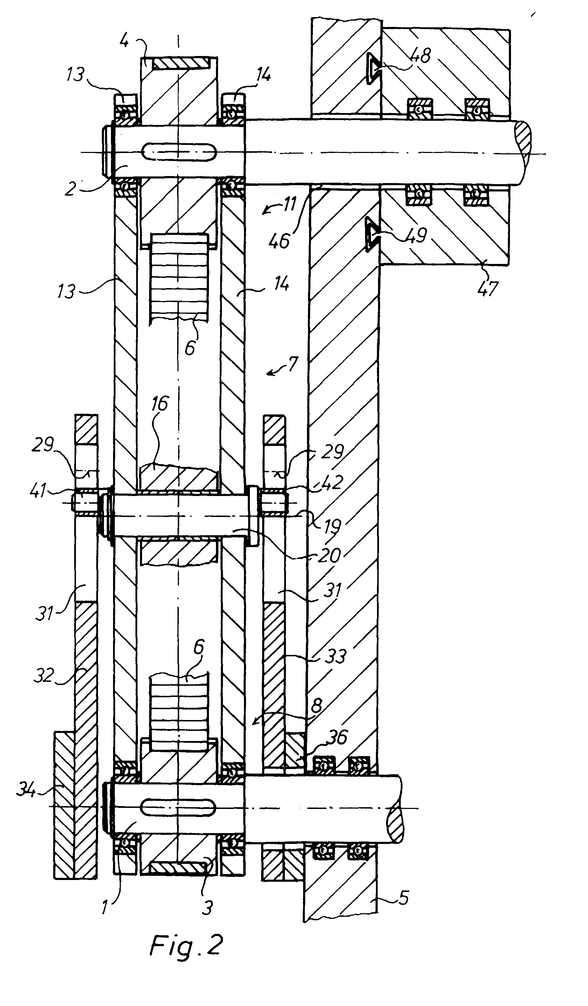

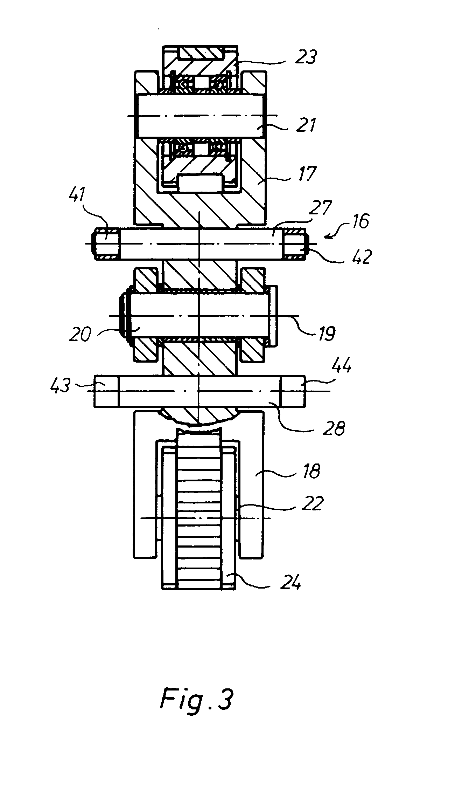

Ein treibender erster Wellenzapfen 1 sowie ein getriebener zweiter Wellenzapfen 2 eines Antriebes sind jeweils mit in einem Seitengestell 5 gelagerten, nicht dargestellten Antrieben verbunden. Sie weisen an ihren in den Zeichnungen 1 und 2 dargestellten Enden jeweils eine wellenfest angeordnete Zahnscheibe 3; 4 zum Eingriff eines geschlossenen Zahnriemens 6 auf. Zwischen den beiden Wellenzapfen 1; 2 ist ein einarmiger Hebel 7 angeordnet, welcher mit seinem ersten Ende 8 auf dem ersten Wellenzapfen 1 schwenkbar gelagert ist, z. B. in einem Schwenkwinkel plus/minus Alpha von 10° zu einer senkrecht verlaufenden Mittellinie 9. Der zweite Wellenzapfen 2 des Antriebes ist in einer den Wellenzapfen 2 aufnehmenden, am zweiten Ende 11 des Hebels 7 befindlichen Längsführung 12 angeordnet. Bei einer Veränderung des Abstandes der beiden Wellenzapfen 1; 2 liegt die Längsführung 12 gleitend immer am zweiten Wellenzapfen 2 an. Der einarmige Hebel 7 kann aus parallel verlaufenden, in einem Abstand zueinander angeordneten Stegen 13; 14 bestehen, zwischen denen sich die von den Wellenzapfen 1; 2 aufgenommenen Zahnscheiben 3; 4 befinden. Etwa auf der halben Länge des Hebels 7 ist ein zweiarmiger Spannhebel 16 mit jeweils gleicher Länge seiner Arme 17; 18 um eine Rotationsachse 19 eines Bolzens 20 des Hebels 7 verdrehbar gelagert. Der Spannhebel 16 trägt an den freien Enden seiner Arme 17; 18 auf Lagerbolzen 21; 22 drehbar angeordnete Spannscheiben 23; 24. Die Spannscheiben 23; 24 sind zum Eingriff des Zahnriemens 6 an ihrem Umfang ebenso ausgebildet wie die bereits erwähnten Zahnscheiben 3; 4. Die Enden der Arme 17; 18 können zur Aufnahme der Lagerbolzen 21; 22 sowie der Spannscheiben 23; 24 gabelförmig ausgebildet sein (Fig. 3). Der Spannhebel 16 weist auf seinen Armen 17; 18 zwei symmetrisch zur Rotationsachse 19 des Bolzens 20 angeordnete Führungsbolzen 27; 28 auf. Die Führungsbolzen 27; 28 können in den Spannhebel 16 eingepreßt sein und ragen jeweils mit ihren beiden Enden 41; 42 sowie 43; 44 über das lichte Maß des Profils des Spannhebels 16 hinaus (Fig. 2 und 3). Die überstehenden Enden 41; 42; 43; 44 der Führungsbolzen 27; 28 stützen sich beidseitig des Spannhebels 16 jeweils in identischen gestellfesten Innenkurven 29; 31 ab. Dabei liegen die Enden 41, 43 an den Kurven 29; 31 eines Seitenteiles 32 an und die Enden 42; 44 an den Kurven 29; 31 eines parallelen Seitenteiles 33 an. Die Seitenteile 32; 33, z. B. in Form von Seitenblechen sind mit seitengestellfesten Traversen 34; 36 fest verbunden. Der Wellenzapfen 2 ragt durch einen in horizontaler Richtung im Seitengestell 5 befindlichen Schlitz 46 und ist in einem auf dem Seitengestell 5 verschiebbar angeordneten Lagergehäuse 47 gelagert. Das Lagergehäuse 47 kann z. B. mittels Linearführungen 48; 49, z. B. Schwalbenschwanzführungen und einem nicht dargestellten Antrieb, z. B. mittels Zahnstange und Getriebemotor im Seitengestell 5 in horizontaler Richtung verfahrbar angeordnet sein.

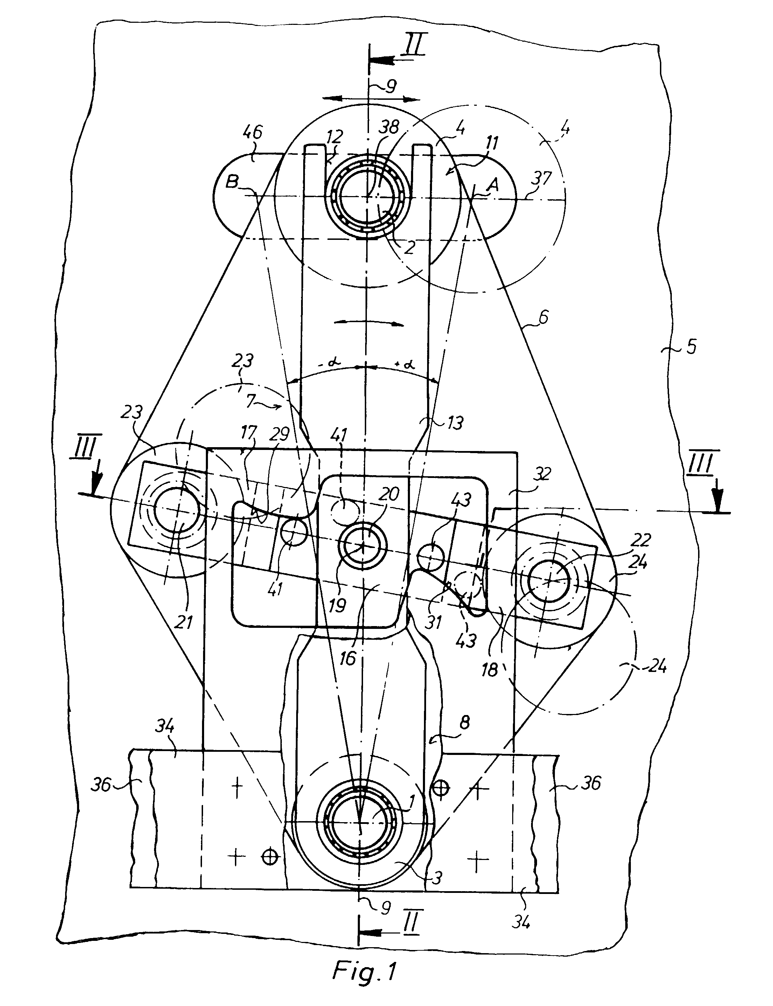

Die erfindungsgemäße Zahnriemenspanneinrichtung arbeitet folgendermaßen. Wird der Antrieb mit dem Wellenzapfen 2 und der mit diesem verbundenen Zahnscheibe 4 in der Linearführung 48; 49 z. B. nach rechts in Richtung einer waagerechten Linie 37 verschoben (Fig. 1), so wird als Folge der Hebel 7 um den Wellenzapfen 1 im Winkel Alpha von z. B. 10° nach rechts verschwenkt (Maximalstellung). Infolge der waagerechten Bewegung des Wellenzapfens 2 und der daraus resultierenden Bewegung des Hebels 7 wird der Wellenzapfen 2 in der Längsführung 12 in Richtung des zweiten Endes 11 des Hebels 7 bewegt, bis eine Endlage A zwischen der waagerechten Linie 37 und der Mittellinie des ausgelenkten Hebels 7 erreicht ist (Endlage A ist in Fig. 1 gezeigt). Somit hat sich der Abstand zwischen den Wellenzapfen 1; 2 vergrößert. Gleichzeitig ist der zweiarmige Spannhebel 16 in Uhrzeigersinn d. h. in Laufrichtung des Zahnriemens 6 um seine Rotationsachse 19 soweit nach rechts verschwenkt, wie dies die Zwangsführung der Kurven 31; 29 in Verbindung mit den Enden 43; 41 der Führungsbolzen 28; 27 zuläßt. Bei dieser Stellung A liegen die Enden 41; 43 der Führungsbolzen 27, 28 an der Kurve 29; 31 an, die Zahnscheibe 4, die Spannscheibe 24 und die Spannscheibe 23 befinden sich jeweils in der Stellung A (Fig. 1, jeweils mit strichpunktierten Bezugslinien gekennzeichnet). Die in dem anderen Seitenteil 33 befindlichen Kurven 29; 31 berühren ebenfalls die Enden 42; 44 der Führungsbolzen 27; 28.
Durch diese genannten beiden Bewegungsabläufe, welche sich gegenseitig überlagern, verringert sich die seitliche Auslenkung des Zahnriemens 6 und vergrößert sich gleichzeitig der Abstand der Wellenzapfen 1, 2 dermaßen, daß zu jedem Zeitpunkt des Bewegungsablaufes die Umschlingungslänge konstant bleibt. Somit bleibt auch die Spannung des Zahnriemens 6 stets konstant. Durch die Symmetrie des Spannhebels 16 und der dadurch symmetrisch ablaufenden Bewegung der Spannrollen 23; 24 am Zahnriemen 6 wird eine ungewollte Verstellung der Antriebe zueinander vermieden.
Ein Antrieb kann auch aus mehr als zwei Antriebselementen bestehen.

Es ist auch möglich, die Drehrichtung des Antriebes umzukehren, so daß der Zahnriemen 6 in Gegenrichtung zu der in Fig. 1 gezeigten Richtung umläuft, also im Gegenuhrzeigersinn.

Weiterhin ist es möglich, die Enden der Führungsbolzen 27; 28 nur einseitig mit einer der Kurven in einem Seitenteil 32 oder 33 in Eingriff zu bringen. Bei einer einseitigen Ausbildung der Kurvensteuerung ist es auch möglich, nur einen der beiden einseitig ausgebildeten Führungsbolzen 27 oder 28 zu verwenden. Der Schwenkwinkel Alpha des Hebels 7 kann zwischen Null und plus/minus 15° zur Mittellinie 9 liegen (Fig. 1). Auch kann der Hebel 7 um einen Winkel minus Alpha zur Mittellinie 9 bis zu einer Endlage B auf der waagerechten Linie 37 schwenken, d. h. die Rotationsachse 38 des zweiten Wellenzapfens 2 befindet sich in der genannten Endlage B (Maximalauslenkung).

Es ist für andere Bewegungen der Antriebswellen möglich, die Kurven entsprechend anzupassen, so daß in jedem Falle eine gleiche Zahnriemenspannung erzielbar ist.

Die Zahnriemenspanneinrichtung kann auch eine andere Lage als die in Fig. 1 gezeigte Lage einnehmen. Z. B. können die Wellenzapfen auf einer waagerechten oder anderen beliebig verlaufenden Linie angeordnet sein. Weiterhin können der treibende sowie der getriebene Wellenzapfen gegenüber der Darstellung in Fig. 1 und 2 miteinander vertauscht sein. Es sind nicht nur die beiden Endlagen A und B möglich, sondern jede dazwischenliegende Lage des Wellenzapfens 2.

Zur Vereinfachung eines Zahnriemenwechsels können die Lagerbolzen 21; 22 der an den Enden des Spannhebels 16 befindlichen Spannscheiben 23; 24 exzentrisch ausgebildet sein.

Die erfindungsgemäße Spanneinrichtung kann auch zum Spannen anderer endloser Antriebselemente eingesetzt werden, z. B. für Seile, Ketten, Keilriemen oder dgl.

### Teileliste

- 1: Wellenzapfen, erster
- 2: Wellenzapfen, zweiter
- 3: Zahnscheibe (1)
- 4: Zahnscheibe (2)
- 5: Seitengestell
- 6: Zahnriemen
- 7: Hebel (12)
- 8: Ende, erstes (7)
- 9: Mittellinie, senkrechte
- 10: -
- 11: Ende, zweites (7)
- 12: Längsführung (11)
- 13: Steg
- 14: Steg
- 15: -
- 16: Spannhebel, zweiarmig
- 17: Arm, erster (16)
- 18: Arm, zweiter (16)
- 19: Rotationsachse
- 20: Bolzen
- 21: Lagerbolzen
- 22: Lagerbolzen
- 23: Spannscheibe
- 24: Spannscheibe
- 25: -
- 26: -
- 27: Führungsbolzen
- 28: Führungsbolzen
- 29: Kurve (32)
- 30: -
- 31: Kurve (33)
- 32: Seitenteil
- 33: Seitenteil
- 34: Traverse (32)
- 35: -
- 36: Traverse (33)
- 37: Linie, waagerechte (2)
- 38: Rotationsachse (2)
- 39: -
- 40: -
- 41: Ende (27)
- 42: Ende (27)
- 43: Ende (28)
- 44: Ende (28)
- 45: -
- 46: Schlitz (5)
- 47: Lagergehäuse (5)
- 48: Linearführung (47)
- 49: Linearführung (47)

- Minus Alpha: Schwenkwinkel (7)
- Plus Alpha: Schwenkwinkel (7)

- A: Endlage
- B: Endlage

## Patentansprüche

1. Zahnriemenspanneinrichtung für einen aus Antriebszahnscheibe (3), Abtriebszahnscheibe (4), Zahnriemen (6) und Spannrolle (23; 24) bestehendem Antriebsstrang, wobei die Achsabstände der Zahnscheiben (3; 4) veränderbar ausgeführt sind und zwischen den beiden Wellenzapfen (1; 2) des Antriebes ein einarmiger Hebel (7) angeordnet ist, der mit seinem ersten Ende (8) auf dem ersten Wellenzapfen (1) schwenkbar gelagert ist, daß der zweite Wellenzapfen (2) in einer wellenabstandsveränderbaren Längsführung (12) des Hebels (7) aufgenommen ist, daß etwa mittig auf dem Hebel (7) ein zweiarmiger Spannhebel (16) verdrehbar gelagert ist, welcher beidendig Spannscheiben (23; 24) trägt, daß der Spannhebel (16) mindestens einen aus seinem Querschnitt herausragenden Führungsbolzen (27 oder 28) aufweist, dessen Ende (41 oder 43) sich an einer gestellfesten Kurve (29 oder 31) abstützt.

2. Zahnriemenspanneinrichtung nach Anspruch 1, dadurch gekennzeichnet, daß der Spannhebel (16) zwei symmetrisch zu seiner Drehachse (19) befestigte Führungsbolzen (27; 28) aufweist, deren Enden (41; 43; 42; 44) sich an gestellfesten Kurven (29; 31) abstützen.

3. Zahnriemenspanneinrichtung nach den Ansprüchen 1 und 2, dadurch gekennzeichnet, daß Lagerbolzen (21; 22) der an den Enden des Spannhebels (16) befindlichen Spannscheiben (23; 24) exzentrisch ausgebildet sind.

## Claims

1. Tensioning device for a toothed belt for a drive train comprising a toothed drive pulley (3), toothed driven pulley (4), toothed belt (6) and tensioning roller (23; 24), wherein [sic] the axial spacings of the toothed pulleys (3; 4) are implemented such that they can be varied and, between the two shaft journals (1; 2) of the drive, there is arranged a single-armed lever (7) whose first end (8) is pivotably mounted on the first shaft journal (1), in that the second shaft journal (2) is accommodated in a longitudinal guide (12), whose shaft spacing can be varied, in the lever (7), in that a two-armed tensioning lever (16) is rotably mounted approximately centrally on the lever (7) and, at both ends, bears tensioning pulleys (23; 24), in that the tensioning lever (16) has at least one guide pin (27 or 28) which projects out of its cross section and whose end (41 or 43) is supported on a cam (29 or 31) fastened to the frame.

2. Tensioning device for a toothed belt according to Claim 1, characterized in that the tensioning lever (16) has two guide pins (27; 28) which are fastened symmetrically in relation to its axis of rotation (19) and whose ends (41; 43; 42; 44) are supported on cams (29; 31) fastened to the frame.

3. Tensioning device for a toothed belt according to Claims 1 and 2, characterized in that bearing pins (21; 22) of the tensioning pulleys (23; 24) located at the ends of the tensioning lever (16) are of eccentric design.

## Revendications

1. Tendeur de courroie cranté pour un train d'entraînement constitué d'une poulie dentée d'entraînement (3), d'une poulie dentée menée (4), d'une courroie crantée (6) et d'un rouleau ou galet tendeur (23; 24), les entre-axes entre les poulies dentées (3; 4) étant réalisés modifiables et, entre les deux tourillons d'arbre (1; 2) de l'entraînement, étant disposé un levier à un bras (7) qui est monté de façon à pouvoir pivoter par sa première extrémité (8) sur le premier tourillon d'arbre (1), en ce que le deuxième tourillon d'arbre (2) est logé dans un guidage longitudinal (12), à espacement d'arbre modifiable, du levier (7), en ce qu'à peu près au centre du levier (7) est monté à rotation un levier de serrage (16) à deux bras qui porte aux deux extrémités des poulies tendeuses (23; 24), en ce que le levier de serrage (16) présente au moins un boulon de guidage (27 ou 28) sortant de sa section transversale, dont l'extrémité (41 ou 43) prend appui sur une came (29 ou 31) fixe par rapport au bâti.

2. Tendeur de courroie cranté selon la revendication 1, caractérisé en ce que le levier de serrage (16) présente deux boulons de guidage (27; 28) fixés symétriquement par rapport à son axe de rotation (19), boulon dont les extrémités (41; 43; 42; 44) prennent appui sur des cames (29; 31) fixes par rapport au bâti.

3. Tendeur de courroie cranté selon les revendications 1 et 2, caractérisé en ce que des boulons de tourillonnement (21; 22) des poulies tendeuses (23; 24) se trouvant aux extrémités du levier de serrage (16) sont réalisés de façon excentrique.
